# EUROPEAN PATENT APPLICATION

(11) **EP 4 160 636 A1**
(43) Date of publication of application: **05.04.2023**
(21) Application number: 21921245.3
(22) Date of filing: 06.12.2021
(51) Int. Cl.: H01H 9/04, H01H 49/00, H01H 50/00, H01H 50/54

(54) **GAS FILLING STRUCTURE, HERMETICALLY SEALED ELECTROMAGNETIC CONTACTOR, AND GAS FILLING METHOD**

(30) Priority: 22.01.2021 JP 2021008373
(71) Applicant: FUJI ELECTRIC FA COMPONENTS & SYSTEMS CO., LTD., Konosu-shi, Saitama 369-0192 (JP)
(72) Inventor: TSUTSUMI, Takashi, Kawasaki-shi, Kanagawa 210-9530 (JP); KONISHI, Koujun, Kawasaki-shi, Kanagawa 210-9530 (JP); ADACHI, Hideo, Kawasaki-shi, Kanagawa 210-9530 (JP)
(74) Representative: Appelt, Christian W.
(86) International application number: PCT/JP2021/044679
(87) International publication number: WO 2022/158143

(57) **Abstract**

A gas filling structure includes a through-hole (91) formed in a hermetically sealed container (11) made of resin to fill the hermetically sealed container (11) with gas and a screw (92) fastened to the through-hole (91) to seal the through-hole (91).

## Description

### Technical Field

The present invention relates to a gas filling structure, a hermetically sealed electromagnetic contactor, and a gas filling method.

### Background Art

In hermetically sealed electromagnetic contactors, by housing a contact unit in a hermetically sealed container and filling the hermetically sealed container with pressurized insulating gas, such as hydrogen, breaking performance of a contact is improved. In a gas filling method described in PTL 1, insulating gas is supplied through a pipe made of metal that communicates with the inside of a hermetically sealed container, and, when the supply of insulating gas is stopped, ultrasonic welding is performed with the opening portion of the pipe closed and, subsequently, the pipe is cut.

### Citation List

### Patent Literature

PLT 1: JP2014110095 A

### Summary of Invention

### Technical Problem

The configuration in which a pipe made of metal is used has been applicable only to a hermetically sealed container using a metal as a base material and has been inapplicable to a hermetically sealed container made of resin. Therefore, there has been a limit to miniaturization and weight reduction and a degree of freedom in design.

An object of the present invention is to enable a gas filling structure to be applied to a hermetically sealed container made of resin and not only achieve miniaturization and weight reduction but also improve a degree of freedom in design of the gas filling structure.

### Solution to Problem

A gas filling structure according to one aspect of the present invention includes a through-hole formed in a hermetically sealed container made of resin to fill the hermetically sealed container with gas, and a fastener fastened to the through-hole to seal the through-hole.

A hermetically sealed electromagnetic contactor according to another aspect of the invention includes the gas filling structure and a main contact unit configured to open and close an electrical path of a main circuit, , the main contact unit is hermetically sealed in the hermetically sealed electromagnetic contactor and the hermetically sealed container is filled with the hermetically sealed container insulating gas.

A gas filling method according to another aspect of the invention includes performing evacuation with a fastener half-fastened to a through-hole formed in a hermetically sealed container made of resin, filling the hermetically sealed container with gas after performing the evacuation, and completing fastening of the fastener after performing filling of the hermetically sealed container with the gas.

### Advantageous Effects of Invention

According to the present invention, since the gas filling structure is a structure in which a through-hole is sealed by a fastener, the gas filling structure is applicable to a hermetically sealed container made of resin and enables not only miniaturization and weight reduction to be achieved but also a degree of freedom in design to be improved.

### Brief Description of Drawings

FIG. 1 is an external view of a hermetically sealed container;
FIG. 2 is an exploded view of the hermetically sealed container;
FIG. 3 is a cross-sectional view of the hermetically sealed container;
FIG. 4 is another cross-sectional view of the hermetically sealed container;
FIG. 5 is a cross-sectional view of a coil contact piece;
FIG. 6 is a diagram illustrative of the coil contact pieces, support springs, and relay contact pieces; and
FIG. 7 is enlarged cross-sectional views of a gas filling structure.

### Description of Embodiments

Hereinafter, embodiments of the present invention are described with reference to the drawings. It should be noted that each drawing is schematic and may not be the same as actual one. Additionally, the embodiments given below exemplify devices and methods for embodying the technological concept of the present invention, and do not limit components of the invention to those below. In other words, various modifications can be added to the technological concept of the present invention without departing from the technological scope described in the appended claims.

### (Embodiment)

In the following description, for descriptive purposes, three directions orthogonal to one another are assumed to be the vertical direction, the width direction, and the depth direction.

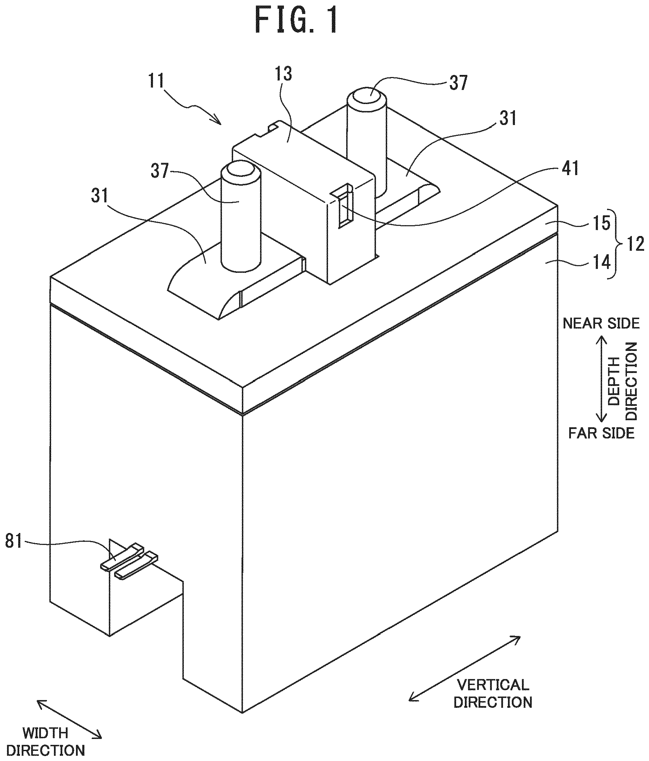

FIG. 1 is an external view of a hermetically sealed container.

A hermetically sealed container 11 is used, housed in a case of a not-illustrated hermetically sealed electromagnetic contactor, and opens and closes an electrical path of a main circuit and also opens and closes an electrical path of an auxiliary circuit in an interlocking manner with opening and closing of the main circuit. The hermetically sealed container 11 is made of a resin having electrical insulation and includes a container body 12 and an auxiliary contact housing portion 13. The container body 12 includes a container portion 14 and a lid portion 15.

The container portion 14 is formed in a square box shape that has the far side in the depth direction, both sides in the vertical direction, and both sides in the width direction closed and the near side in the depth direction opened.

The lid portion 15 fits into the open end of the container portion 14 and closes the near side in the depth direction of the container portion 14. It is assumed that a protruding line portion and a recessed line portion are formed on one and the other of the container portion 14 and the lid portion 15, respectively and the protruding line portion and the recessed line portion are fitted to each other.

The auxiliary contact housing portion 13 is disposed at the center of the lid portion 15, is formed in a square small-box shape that has the near side in the depth direction, both sides in the vertical direction, and both sides in the width direction closed and the far side in the depth direction opened, and communicates with the inside of the container body 12.

The hermetically sealed container 11 is filled with pressurized insulating gas, such as hydrogen and nitrogen. Therefore, the hermetically sealed container 11 not only has the container portion 14, the lid portion 15, and the auxiliary contact housing portion 13 fixed to each other with epoxy resin-based adhesive, but also has gas barrier coating applied to the entire outer peripheral surface including boundary portions, using laminated films of clay crystals. Specifically, exchanging interlayer ions in purified smectite and joining the laminated films with an organic binder, such as polyvinyl alcohol (PVA) and water-soluble nylon, causes the laminated films to exhibit labyrinth effect and thereby prevent permeation of gas molecules, such as hydrogen and nitrogen. The laminated films are stacked in the thickness direction, and the thickness thereof is, for example, 2 um. The gas barrier coating is applied by a spray method in which coating liquid is formed into mist and applied to the hermetically sealed container 11, and is completed by being burned at a temperature at which interlayer ions are incorporated into clay crystals, for example, a temperature greater than or equal to 150°C. Since, as described above, gas barrier coating is applied to the entire outer peripheral surface, the outer peripheral shape of the hermetically sealed container 11 is preferably formed in a polygon that is composed of planes that are flat and linear to the extent possible.

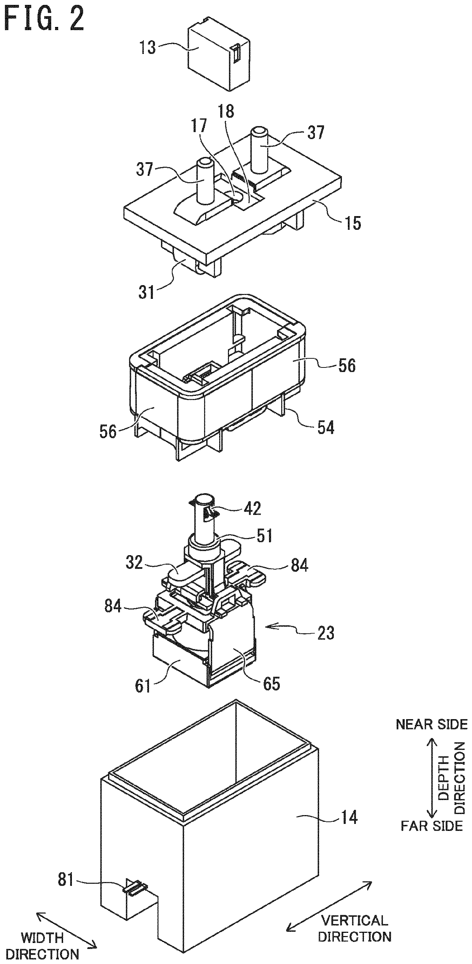

FIG. 2 is an exploded view of a hermetically sealed container.

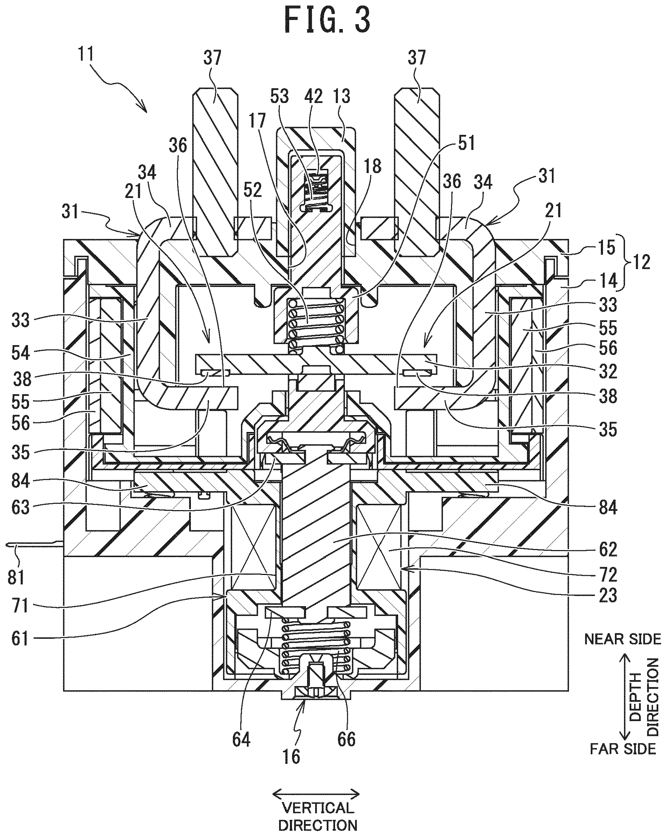

FIG. 3 is a cross-sectional view of the hermetically sealed container.

In this drawing, a cross section passing the center in the width direction and taken along the vertical direction and the depth direction is illustrated.

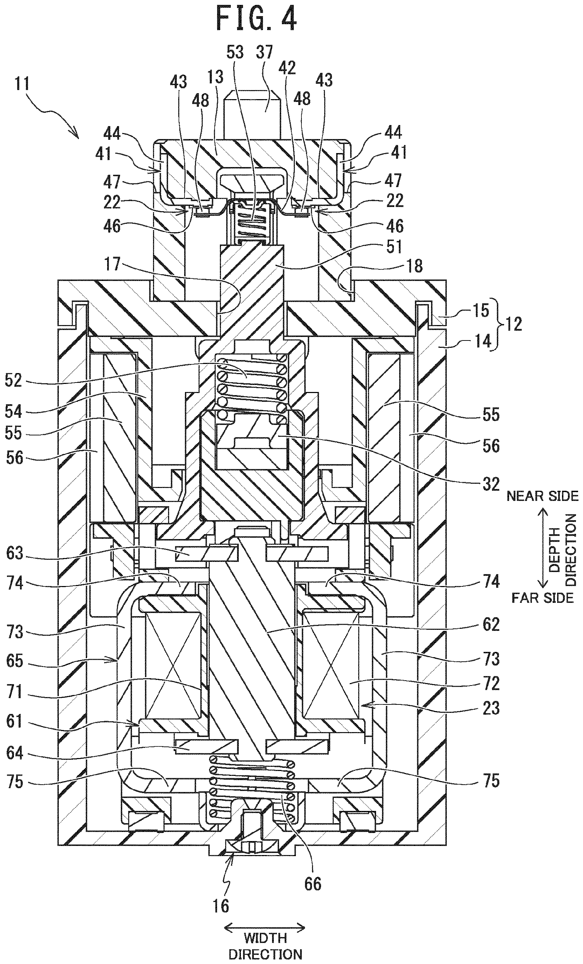

FIG. 4 is another cross-sectional view of the hermetically sealed container.

In this drawing, a cross section passing the center in the vertical direction and taken along the width direction and the depth direction is illustrated.

In the hermetically sealed container 11, a main contact unit 21, an auxiliary contact unit 22, and an electromagnet unit 23 are housed. Specifically, the auxiliary contact unit 22 is arranged in the auxiliary contact housing portion 13, the main contact unit 21 is arranged on the near side in the depth direction in the container body 12, and the electromagnet unit 23 is arranged on the far side in the depth direction in the container body 12. In the container portion 14, a gas filling structure 16 for filling of the hermetically sealed container 11 with insulating gas is formed at the center of the bottom surface.

The main contact unit 21 is a contact unit connected to a main circuit via crimp terminals and configured to open and close an electrical path of the main circuit, and the container body 12 includes a pair of main fixed contact pieces 31 and a main movable contact piece 32.

The pair of main fixed contact pieces 31 are belt-shaped metals having conductivity and are arranged with a gap interposed therebetween in the vertical direction. Each of the main fixed contact pieces 31 includes a side plate portion 33, an upper plate portion 34, and a lower plate portion 35 and is formed in a substantially U-shape opening to the inner side in the vertical direction when viewed from the width direction. The side plate portion 33 is formed in a plate shape extending in the depth direction and aligned with the width direction and the depth direction on the outer side in the vertical direction, and penetrates through the lid portion 15. The upper plate portion 34 is formed in a plate shape aligned with the vertical direction and the width direction and extends from the near side in the depth direction of the side plate portion 33 toward the inner side in the vertical direction outside the container body 12. The lower plate portion 35 is formed in a plate shape aligned with the vertical direction and the width direction and extends from the far side in the depth direction of the side plate portion 33 toward the inner side in the vertical direction inside the container body 12.

The pair of lower plate portions 35 are disposed with a gap interposed between the tip ends thereof, which face each other in the vertical direction, inside the container body 12 and respectively have main fixed contacts 36 formed on surfaces on the near side in the depth direction. The pair of upper plate portions 34 are arranged with a gap interposed between the tip ends thereof, which face each other in the vertical direction, outside the container body 12 and are disposed in such a manner that surfaces thereof on the far side in the depth direction come into contact with the lid portion 15. In each of the pair of upper plate portions 34, a threaded hole penetrating in the depth direction is formed and a terminal bolt 37 is fitted into an internal threaded portion of the threaded hole. Each of the terminal bolts 37 is made of a metal having conductivity and is a stud bolt that does not have a head and on which an external threaded portion is formed over the entire length in the depth direction. The terminal bolt 37 has the far side in the depth direction embedded in the lid portion 15 and the near side in the depth direction, which projects out of the upper plate portion 34, serving as a main terminal. One and the other of the pair of terminal bolts 37 are connected to the primary side and the secondary side of the main circuit, respectively.

The pair of main fixed contact pieces 31 and terminal bolts 37 are integrated with the lid portion 15 with the side plate portions 33 penetrating through the lid portion 15 by insert molding. Specifically, after fine micron-sized protruding and recessed shapes are formed on the surfaces of the main fixed contact pieces 31 and the surfaces of the terminal bolts 37 by chemical etching, insert molding is performed. Through this processing, melted resin enters the inside of the protruding and recessed shapes and solidification of the resin causes the metal and the resin to be joined at the interface level and produces complex junctions exhibiting labyrinth effect, which prevents gas molecules, such as hydrogen and nitrogen, from leaking. Examples of the metal surface treatment technology include "AMALPHA" (registered trademark) by MEC COMPANY LTD.

The main movable contact piece 32 is made of a metal having conductivity, is formed in a plate shape extending in the vertical direction and aligned with the vertical direction and the width direction, and is arranged on the near side in the depth direction of the pair of lower plate portions 35. On both end sides of the main movable contact piece 32, main movable contacts 38 are brazed on a surface on the far side in the depth direction. The main movable contact piece 32 causes the main movable contacts 38 to be respectively separated from the main fixed contacts 36 when the main movable contact piece 32 retreats to the near side in the depth direction, and causes the main movable contacts 38 to respectively come into contact with the main fixed contacts 36 when the main movable contact piece 32 advances to the far side in the depth direction. The main contact unit 21 is formed by the main fixed contacts 36 and the main movable contacts 38. Since the main movable contact piece 32 opens and closes an electrical path of the main circuit by moving in the depth direction, the depth direction serves as an opening/closing direction for the main contact unit 21.

The auxiliary contact unit 22 is a contact unit connected to an auxiliary circuit via connector terminals and configured to open and close an electrical path of the auxiliary circuit, and the auxiliary contact housing portion 13 includes a pair of auxiliary fixed contact pieces 41 and an auxiliary movable contact piece 42 (see FIG. 4).

The pair of auxiliary fixed contact pieces 41 are belt-shaped metals having conductivity and are arranged with a gap interposed therebetween in the vertical direction. Each of the auxiliary fixed contact pieces 41 includes a lower plate portion 43 and a side plate portion 44 and is formed in a substantially L-shape when viewed from the vertical direction. The lower plate portion 43 is formed in a plate shape extending in the width direction and aligned with the width direction and the vertical direction, and penetrates through a sidewall of the auxiliary contact housing portion 13. The side plate portion 44 is formed in a plate shape aligned with the vertical direction and the depth direction and extends from the outer side in the width direction of the lower plate portion 43 toward the near side in the depth direction outside the auxiliary contact housing portion 13.

The pair of lower plate portions 43 are disposed with a gap interposed between the tip ends thereof, which face each other in the width direction, inside the auxiliary contact housing portion 13 and respectively have auxiliary fixed contacts 46 brazed on surfaces on the far side in the depth direction. On the auxiliary contact housing portion 13, a recessed portion 47, which is recessed toward the inner side in the width direction, is formed on each of outer peripheral surfaces on both sides in the width direction, and the side plate portions 44 are exposed by the recessed portions 47. The pair of side plate portions 44, which are exposed by the recessed portions 47, serve as auxiliary terminals, and one and the other of the auxiliary terminals are connected to the primary side and the secondary side of the auxiliary circuit, respectively. The pair of auxiliary fixed contact pieces 41 are integrated with the auxiliary contact housing portion 13 in such a manner as to penetrate through sidewalls of the auxiliary contact housing portion 13 by insert molding. As for a method of insert molding, the same method as that used for the afore-described main fixed contact pieces 31 can be used.

The auxiliary movable contact piece 42 is made of a metal having conductivity, is formed in a plate shape extending in the width direction and aligned with the width direction and the vertical direction, and is arranged on the far side in the depth direction of the pair of auxiliary fixed contact pieces 41. Both end sides of the auxiliary movable contact piece 42 bifurcate and form dual contacts, and auxiliary movable contacts 48 are brazed on a surface on the near side in the depth direction of the auxiliary movable contact piece 42. The auxiliary movable contact piece 42 causes the auxiliary movable contacts 48 to respectively come into contact with the auxiliary fixed contacts 46 when the auxiliary movable contact piece 42 retreats to the near side in the depth direction, and causes the auxiliary movable contacts 48 to be respectively separated from the auxiliary fixed contacts 46 when the auxiliary movable contact piece 42 advances to the far side in the depth direction. The auxiliary contact unit 22 is formed by the auxiliary fixed contacts 46 and the auxiliary movable contacts 48. Since the auxiliary movable contact piece 42 opens and closes an electrical path of the auxiliary circuit by moving in the depth direction, the depth direction serves as an opening/closing direction for the auxiliary contact unit 22.

The main movable contact piece 32 and the auxiliary movable contact piece 42 are supported by a contact support 51. The contact support 51 is made of a resin having electrical insulation and is arranged between the pair of main fixed contact pieces 31. In the lid portion 15, an opening portion 17 penetrating in the depth direction is formed between the pair of upper plate portions 34. The contact support 51 has the far side in the depth direction, which serves as the base end side, elastically supporting the main movable contact piece 32 via a main contact spring 52 inside the container body 12. The main contact spring 52 maintains contact pressure of the main contact unit 21 constant by biasing the main movable contact piece 32 to the far side in the depth direction.

The contact support 51 has the near side in the depth direction, which serves as the tip end side, passing the opening portion 17 and elastically supporting the auxiliary movable contact piece 42 via an auxiliary contact spring 53 inside the auxiliary contact housing portion 13. The auxiliary contact spring 53 maintains contact pressure of the auxiliary contact unit 22 constant by biasing the auxiliary movable contact piece 42 to the near side in the depth direction.

On the lid portion 15, a recessed portion 18 that is recessed toward the far side in the depth direction and into which the far side in the depth direction of the auxiliary contact housing portion 13 can be fitted is formed between the pair of upper plate portions 34 within a surface on the near side in the depth direction. The auxiliary contact housing portion 13 covers the tip end side of the contact support 51 and hermetically seals the opening portion 17 by being fixed to the recessed portion 18.

In the container body 12, a partition wall member 54 is disposed around the contact support 51. The partition wall member 54 is made of a resin having electrical insulation and is formed in a square cylindrical shape that surrounds both sides in the vertical direction and both sides in the width direction. On the partition wall member 54, a plate-shaped permanent magnet 55 is fitted into each of surfaces on both sides in the vertical direction and surfaces on both sides in the width direction of the outer peripheral surfaces, and belt-shaped yokes 56 are further disposed over the circumference of the partition wall member 54. A pair of permanent magnets 55 arranged on both sides in the vertical direction have the inner sides in the vertical direction magnetized to the S-pole, and a pair of permanent magnets 55 arranged on both sides in the width direction have the inner sides in the width direction magnetized to the N-pole. Because of this configuration, when viewed from the depth direction, magnetic flux flowing from the respective permanent magnets 55 arranged on both sides in the vertical direction to the respective permanent magnets 55 arranged on both sides in the width direction is formed. The yokes 56 are halved at the center in the vertical direction and each of the yokes 56 is formed in a substantially U-shape opening to the inner side in the vertical direction when viewed from the depth direction, and fitting the pair of yokes 56 to each other from both sides in the vertical direction causes the yokes 56 to surround the entire circumference of the partition wall member 54 viewed from the depth direction.

The electromagnet unit 23 is housed on the far side in the depth direction in the container portion 14 and switches opening/closing of the main contact unit 21 and opening/closing of the auxiliary contact unit 22. The electromagnet unit 23 includes a spool 61, a plunger 62, an upper armature 63, a lower armature 64, yokes 65, and a return spring 66 (see FIG. 4).

The spool 61 is made of a resin having electrical insulation, and a coil 72 is wound around a cylindrical winding shaft 71, which extends in the depth direction. The plunger 62 is a columnar movable iron core, which extends in the depth direction, and is inserted into the winding shaft 71. The plunger 62 has the near side in the depth direction coupled to the contact support 51 via a plate spring. The upper armature 63 is a flat plate-shaped yoke aligned with the vertical direction and the width direction and is fixed to the near side in the depth direction of the plunger 62. The lower armature 64 is a flat plate-shaped yoke aligned with the vertical direction and the width direction and is fixed to the far side in the depth direction of the plunger 62.

The pair of yokes 65 are plate-shaped yokes, and each of the yokes 65 is fixed to one of one side and the other side in the width direction of the spool 61. Each of the yokes 65 includes a side piece portion 73, an upper piece portion 74, and a lower piece portion 75 and is formed in a substantially U-shape opening to the inner side in the width direction when viewed from the vertical direction.

The side piece portion 73 is formed in a plate shape aligned with the vertical direction and the depth direction and covers the outer side in the width direction of the spool 61.

The upper piece portion 74 is formed in a plate shape aligned with the vertical direction and the width direction and extends from the near side in the depth direction of the side piece portion 73 toward the inner side in the width direction.

The lower piece portion 75 is formed in a plate shape aligned with the vertical direction and the width direction and extends from the far side in the depth direction of the side piece portion 73 toward the inner side in the width direction.

Separation distance between the upper piece portion 74 and the lower piece portion 75 is the same as separation distance between the upper armature 63 and the lower armature 64. The upper piece portion 74 is disposed on the far side in the depth direction of the upper armature 63, and the lower piece portion 75 is disposed on the far side in the depth direction of the lower armature 64.

The return spring 66 is sandwiched between the lower armature 64 and the bottom surface of the container portion 14 and biases the plunger 62 to the near side in the depth direction.

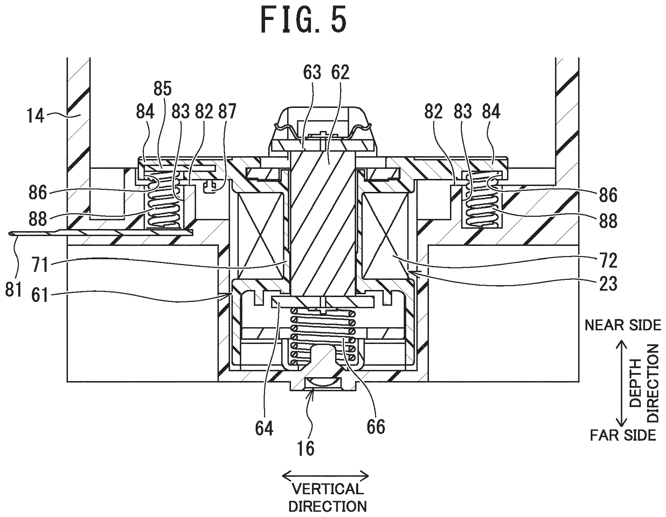

FIG. 5 is a cross-sectional view of a coil contact piece.

In this drawing, a cross section passing a coil contact piece 81 and taken along the vertical direction and the depth direction is illustrated.

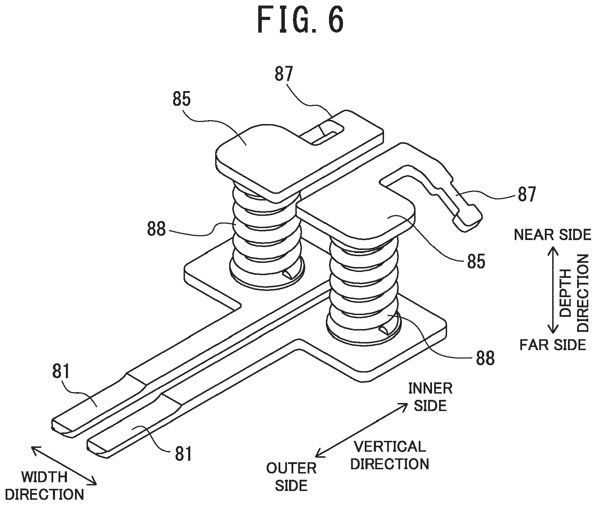

A pair of coil contact pieces 81 are made of a metal having conductivity, are formed in plate shapes aligned with the vertical direction and the width direction, and are arranged in parallel with a gap interposed therebetween in the width direction (see FIG. 6). One of the coil contact pieces 81 has the inner side in the vertical direction arranged inside the container body 12 and the outer side in the vertical direction connected to the positive side of a control circuit outside the container body 12. The other of the coil contact pieces 81 has the inner side in the vertical direction arranged inside the container body 12 and the outer side in the vertical direction connected to the negative side of the control circuit outside the container body 12. The pair of coil contact pieces 81 are integrated with the container portion 14 in such a manner as to penetrate through a sidewall of container portion 14 by insert molding. As for a method of insert molding, the same method as that used for the afore-described main fixed contact pieces 31 can be used.

On the inner peripheral surface of the container portion 14, a step-shaped spool receiving portion 82 is formed on each of both end sides in the vertical direction. On each of the spool receiving portions 82, two deep recessed portions 83, each of which is recessed toward the far side in the depth direction, are formed on a surface on the near side in the depth direction. A pair of deep recessed portions 83 are arranged in parallel with a gap interposed therebetween in the width direction, and, on one side in the vertical direction, the inner sides in the vertical direction of the coil contact pieces 81 are exposed by the deep recessed portions 83. The front surfaces of the coil contact pieces 81 that are exposed on one side in the vertical direction and the bottom surfaces of the deep recessed portions 83 formed on the other side in the vertical direction are located at the same position in the depth direction.

On the spool 61, an arm piece 84, which projects toward the outer side in the vertical direction, is formed on the near side in the depth direction and each of both sides in the vertical direction (see FIG. 3). Each of the arm pieces 84 is formed in a substantially plate shape aligned with the vertical direction and the width direction and serves as a cantilever. On one side in the vertical direction, a pair of relay contact pieces 85 are insert-molded in the arm piece 84 (see FIG. 6). The pair of relay contact pieces 85 are made of a metal having conductivity and are formed in plate shapes aligned with the vertical direction and the width direction. Since the relay contact pieces 85 are not components that penetrate through the hermetically sealed container 11, the method of insert molding does not require a special metal surface treatment technology as in a case of the afore-described main fixed contact pieces 31.

On each of the arm pieces 84, two shallow recessed portions 86, each of which is recessed toward the near side in the depth direction, are formed on a surface on the far side in the depth direction. Each pair of shallow recessed portions 86 are arranged in parallel with a gap interposed therebetween in the width direction, and, on one side in the vertical direction, the outer sides in the vertical direction of the relay contact pieces 85 are exposed by the shallow recessed portions 86. The front surfaces of the relay contact pieces 85 that are exposed on one side in the vertical direction and the bottom surfaces of the shallow recessed portions 86 formed on the other side in the vertical direction are located at the same position in the depth direction. On each of the relay contact pieces 85, a projecting portion 87, which projects from an end portion on the inner side in the vertical direction toward the outer side in the width direction, is formed (see FIG. 6). Each of the projecting portions 87 projects from a side surface in the width direction of the arm piece 84 and is inclined to the far side in the depth direction. To one of the projecting portions 87, one end of a winding wire of the coil 72 is soldered, and, to the other of the projecting portions 87, the other end of the winding wire of the coil 72 is soldered.

In each of the deep recessed portions 83 and corresponding one of the shallow recessed portions 86, a support spring 88 (spring member) is housed. Each of the support springs 88 has a feature that free height when no load is applied in the compression direction is greater than a dimension obtained by adding depth of a shallow recessed portion 86 to depth of a deep recessed portion 83. Although, when all the components are housed in the hermetically sealed container 11, a load in the compression direction is applied to the support springs 88, the support springs 88 are set to keep the arm pieces 84 separated upward from the spool receiving portions 82 even on this occasion (see FIG. 3). Therefore, the spool 61 has the pair of arm pieces 84 suspended on two pairs of support springs 88, each pair of which is disposed on one side. When the lid portion 15 is fixed to the container portion 14, the spool 61 being pressed to the lid portion 15 via the partition wall member 54 due to repulsive force of the support springs 88 causes backlash to be suppressed.

FIG. 6 is a diagram illustrative of the coil contact pieces, the support springs, and the relay contact pieces.

In this drawing, a configuration in which only the coil contact pieces 81, the relay contact pieces 85, and the support springs 88 are picked out and the container portion 14, the arm pieces 84, and the spool receiving portions 82 are omitted is illustrated. The support springs 88 are made of a metal having conductivity. On one side in the vertical direction, the support springs 88 are sandwiched between the coil contact pieces 81 and the relay contact piece 85 while being compressed, and the support springs 88 are in contact with both the coil contact pieces 81 and the relay contact pieces 85. This configuration causes the coil contact pieces 81 and the coil 72 to be electrically connected. Therefore, on the one side in the vertical direction, the support springs 88 serve as both a support of the spool 61 and an electrical connection for the coil contact pieces 81.

According to the above description, when the coil 72 is in a non-excited state in which no current is applied to the coil 72, the plunger 62 has retreated to the near side in the depth direction due to repulsive force of the return spring 66 and, in association therewith, the contact support 51 also retreats to the near side in the depth direction. Because of this configuration, the main contact unit 21 is opened and, at the same time, the auxiliary contact unit 22 is closed. On this occasion, the upper armature 63 is separated from the upper piece portions 74, and the lower armature 64 is separated from the lower piece portions 75.

When, while the coil 72 is in this state, current is applied to the coil 72 and the coil 72 is excited, the upper armature 63 is attracted and stuck to the upper piece portions 74 and, at the same time, the lower armature 64 is attracted and stuck to the lower piece portions 75. Therefore, the plunger 62 advances to the far side in the depth direction against the repulsive force of the return spring 66 and, in association therewith, the contact support 51 also advances to the far side in the depth direction. Because of this configuration, the main contact unit 21 is closed and, at the same time, the auxiliary contact unit 22 is opened.

Next, the gas filling structure 16 will be described.

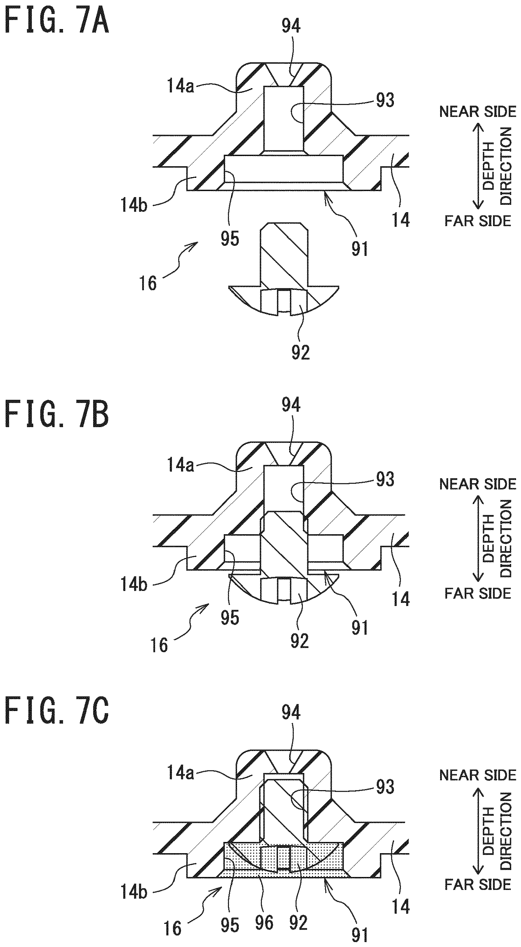

FIG. 7 is enlarged cross-sectional views of the gas filling structure.

The gas filling structure 16 includes a through-hole 91 and a screw 92 (fastener). FIGS. 7A, 7B, and 7C illustrate a state before the screw 92 is fitted, a state in which the screw 92 is fastened by substantially half of the length thereof, and a state in which the fastening of the screw 92 is completed, respectively.

At the center of the bottom of the container portion 14, a small-diameter boss 14a, which protrudes toward the near side in the depth direction, is formed on the inner peripheral surface, and a large-diameter boss 14b, which protrudes toward the far side in the depth direction, is formed on the outer peripheral surface. The small-diameter boss 14a is configured to be located inside the lower end side of the return spring 66. The through-hole 91 penetrates the bottom of the container portion 14 in the depth direction from the small-diameter boss 14a to the large-diameter boss 14b, and includes a threaded hole 93 (first through-hole), a tapered hole 94 (second through-hole), and a countersunk hole 95.

The screw 92 is, for example, made of stainless steel and is a truss head screw that has a cross hole formed on the spherically-shaped head thereof. In addition, the shaft of the shank has a uniform diameter, and an external threaded portion is formed over the entire length of the shank. Material, the shape of the head, the shape of a groove or a hole formed on the head, and the like of the screw 92 can be arbitrarily determined.

The threaded hole 93 is mainly formed at a part corresponding to the small-diameter boss 14a and the bottom of the container portion 14, is a bottomed hole that is recessed toward the near side in the depth direction, and has an internal threaded portion, to which the screw 92 fits, formed on the inner peripheral surface. The depth dimension of the threaded hole 93 is greater than the length of the shank (nominal length) of the screw 92. Therefore, even when the screw 92 is fastened until the bearing surface of the head of the screw 92 is tightly fastened to the bottom surface of the countersunk hole 95, there is no possibility that the tip of the screw 92 reaches the bottom of the threaded hole 93.

The tapered hole 94 is formed at a part corresponding to the small-diameter boss 14a, is connected in such a manner that the inside of the container portion 14 communicates with the bottom of the threaded hole 93, and is formed in a shape having diameter becoming smaller toward the threaded hole 93. The tapered hole 94 has the diameter dimension of the far side end in the depth direction set to be smaller than that of the threaded hole 93 and the diameter dimension of the near side end in the depth direction set to be substantially equal to that of the threaded hole 93.

The countersunk hole 95 is mainly formed at a part corresponding to the large-diameter boss 14b, is connected to the threaded hole 93 from the outside of the container portion 14, and is formed in a shape having a larger diameter than that of the head of the screw 92 and having a depth greater than the height of the head of the screw 92.

Next, an insulating gas filling method will be described.

First, the hermetically sealed container 11 is assembled, the hermetically sealed container 11 is housed in a not-illustrated chamber with the screw 92 half-fastened to the threaded hole 93, and evacuation is performed. Being half-fastened is a state in which only a tip portion or approximately half on the tip end side of the external threaded portion of the screw 92 is fitted into the internal threaded portion of the threaded hole 93.

Succeedingly, by supplying pressurized insulating gas into the chamber, the hermetically sealed container 11 is filled with insulating gas through the threaded hole 93.

Succeedingly, by operating a bit disposed in the chamber, fastening of the screw 92 to the threaded hole 93 is completed. The completion of fastening is a state in which the bearing surface of the head of the screw 92 is tightly fastened to the bottom surface of the countersunk hole 95 and has a load applied thereto.

Succeedingly, the hermetically sealed container 11 is taken out from the chamber, the head of the screw 92 is buried in epoxy resin-based adhesive 96 by injecting the adhesive 96 into the countersunk hole 95, and the adhesive 96 is dried. It is preferable to inject the adhesive 96 in such a way that, when the adhesive 96 has dried, the adhesive 96 in the countersunk hole 95 has a surface substantially flush with the undersurface of the large-diameter boss 14b. There is no possibility that, at room temperature, the insulating gas is discharged from the hermetically sealed container 11 in a short time.

Succeedingly, gas barrier coating is applied to the hermetically sealed container 11, using laminated films of clay crystals, and, as a consequence, the hermetically sealed container 11 to be used in a hermetically sealed electromagnetic contactor is completed.

### (Advantageous Effects)

Next, main advantageous effects of the embodiment will be described.

In conventional gas filling methods, insulating gas is supplied through a pipe made of metal that communicates with the inside of a hermetically sealed container, and, when the supply of insulating gas is stopped, ultrasonic welding is performed with the opening portion of the pipe closed and, subsequently, the pipe is cut. However, the configuration in which a pipe made of metal is used has been applicable only to a hermetically sealed container using a metal as a base material and has been inapplicable to a hermetically sealed container made of resin. Therefore, there has been a limit to miniaturization and weight reduction and a degree of freedom in design. Accordingly, in the present embodiment, the through-hole 91 is formed in the container portion 14 made of resin to fill the container portion 14 with gas and the screw 92 is fastened to the through-hole 91 to seal the through-hole 91. Since, as described above, a structure in which the through-hole 91 is sealed by the screw 92 is employed, the present embodiment is applicable to the hermetically sealed container 11 made of resin and enables not only miniaturization and weight reduction to be achieved but also a degree of freedom in design to be improved.

The through-hole 91 includes the threaded hole 93 to which the screw 92 is fastened and the tapered hole 94 connected to the threaded hole 93 from the inside of the container portion 14. The tapered hole 94 is formed in a shape having diameter becoming smaller toward the threaded hole 93. In mold forming, it is generally difficult to form a small hole due to difficulty in ensuring strength of a mold. Forming a hole connected to the threaded hole 93 in a tapered shape enables the strength of a mold for molding the container portion 14 to be improved.

The tapered hole 94 is formed in such a manner that the diameter of one end that is connected to the threaded hole 93 is smaller than the diameter of the threaded hole 93. This configuration enables dust and foreign objects to be prevented from entering the hermetically sealed container 11. In addition, the hermetically sealed container 11 is pressurized to approximately 5 atmosphere, the tapered hole 94, which is smaller than the threaded hole 93, serves as a choke, which is preferable for safety reasons. In particular, although pressure sometimes increases due to increase in temperature at the time of breaking, the tapered hole 94 functioning as a choke enables pressure that the tip of the screw 92 receives to be reduced.

Since a structure in which the screw 92 is fitted into the threaded hole 93 is employed, fastening work is easy to perform.

Since the screw 92 has the head buried by the adhesive 96, a concave-convex surface can be easily flattened.

Since the main contact unit 21, which opens and closes an electrical path of the main circuit, is hermetically sealed in the hermetically sealed container 11, which has the gas filling structure 16, and the hermetically sealed container 11 is filled with insulating gas, which improves breaking performance, it is possible to prevent the arc-extinguishing space from becoming larger in size.

To the hermetically sealed container 11, gas barrier coating is applied using laminated films of clay crystals. This configuration can suppress permeation of gas molecules, such as hydrogen and nitrogen, and thereby prevent leakage of pressurized insulating gas.

In the gas filling method, first, evacuation is performed with the screw 92 half-fastened to the through-hole 91, and, succeedingly, the hermetically sealed container 11 is filled with insulating gas and, succeedingly, fastening of the screw 92 is completed. Although, when the screw 92 is half-fastened, passage of insulating gas is allowed, when the fastening of the screw 92 is completed, there is no possibility that, at room temperature, the insulating gas is discharged in a short time. Therefore, when the screw 92 is half-fastened, it is possible to easily perform filling of the hermetically sealed container 11 with insulating gas, and, when the fastening of the screw 92 is completed, it is possible to prevent insulating gas from leaking.

Since it is only required to completely fasten the screw 92 having been half-fastened, the work is easy to perform.

After the fastening of the screw 92 is completed, the head of the the screw 92 is buried by the adhesive 96, and, succeedingly, gas barrier coating is applied to the hermetically sealed container 11, using laminated films of clay crystals. This configuration can suppress permeation of gas molecules, such as hydrogen and nitrogen, and thereby prevent leakage of pressurized insulating gas.

Next, other advantageous effects of the embodiment will be described.

Although hermetically sealed containers, which house a main contact unit and an auxiliary contact unit, have been hitherto containers made of metal and covered by a lid made of ceramic, it has been difficult to lead out auxiliary terminals while maintaining electrical insulation and increases in the number of components and cost have been brought about. Accordingly, in the present embodiment, first, the main contact unit 21 and the electromagnet unit 23 are hermetically sealed in the container body 12 made of resin. Further, the auxiliary contact unit 22 is disposed outside the container body 12 on the near side in the depth direction of the main contact unit 21, and the auxiliary contact unit 22 is hermetically sealed in the auxiliary contact housing portion 13, which is made of resin and communicates with the inside of the container body 12. The container body 12 and the auxiliary contact housing portion 13 are filled with insulating gas. Employing the container body 12 and the auxiliary contact housing portion 13 that are made of resin as described above enables the auxiliary contact housing portion 13 to be easily disposed on one side in the opening/closing direction of the container body 12, while enabling electrical insulation to be secured. Therefore, it is possible to dispose an auxiliary contact with a simpler structure at a low cost.

To the container body 12 and the auxiliary contact housing portion 13, gas barrier coating is applied using laminated films of clay crystals. This configuration can suppress permeation of gas molecules, such as hydrogen and nitrogen, and thereby prevent leakage of pressurized insulating gas.

In the container body 12, the opening portion 17 is formed on the near side in the depth direction. The contact support 51, which is capable of advancing and retreating in the depth direction, has the base end side supporting the movable side of the main contact unit 21 inside the container body 12 and the tip end side passing the opening portion 17 and supporting the movable side of the auxiliary contact unit 22 inside the auxiliary contact housing portion 13. Disposing the opening portion 17 on a line along which the contact support 51 advances and retreats and causing the tip end side of the contact support 51 to enter the inside of the auxiliary contact housing portion 13 via the opening portion 17 as described above enable a structure that is easy to assemble and is inexpensive to be achieved.

The auxiliary contact housing portion 13 covers the tip end side of the contact support 51 and hermetically seals the opening portion 17. Hermetically sealing the container body 12 and the auxiliary contact housing portion 13 as described above enables breaking performance of the main contact unit 21 and the auxiliary contact unit 22 to be improved. Therefore, it is possible to prevent an arc-extinguishing space from becoming larger in size and achieve miniaturization and weight reduction.

The auxiliary contact housing portion 13 is fixed to the recessed portion 18 of the lid portion 15 by epoxy resin-based adhesive. Using adhesive for bonding between the lid portion 15 and the auxiliary contact housing portion 13 as described above enable a structure that is easy to assemble and is inexpensive to be achieved.

The pair of auxiliary fixed contact pieces 41 are arranged with a gap interposed between one end sides thereof inside the auxiliary contact housing portion 13, the auxiliary fixed contact 46 is formed on one end side of each of the auxiliary fixed contact pieces 41, and the other end side of each of the auxiliary fixed contact pieces 41 is connected to the auxiliary circuit outside the auxiliary contact housing portion 13. The auxiliary movable contact piece 42 has the auxiliary movable contacts 48 formed on both end sides and causes the auxiliary movable contacts 48 to respectively come into contact with and be separated from the auxiliary fixed contacts 46. The auxiliary contact unit 22 is formed by the auxiliary fixed contacts 46 and the auxiliary movable contacts 48. The pair of auxiliary fixed contact pieces 41 are subjected to surface treatment by chemical etching and are integrated with the auxiliary contact housing portion 13 by insert molding. This processing causes the metal and the resin to be joined at the interface level and produces complex junctions exhibiting labyrinth effect, which enables gas molecules, such as hydrogen and nitrogen, to be prevented from leaking.

The pair of main fixed contact pieces 31 are arranged with a gap interposed between one end sides thereof inside the container body 12, the main fixed contact 36 is formed on one end side of each of the main fixed contact pieces 31, and the other end side of each of the main fixed contact pieces 31 is connected to the main circuit outside the container body 12. The main movable contact piece 32 has the main movable contacts 38 formed on both end sides and causes the main movable contacts 38 to respectively come into contact with and be separated from the main fixed contacts 36. The main contact unit 21 is formed by the main fixed contacts 36 and the main movable contacts 38. The pair of main fixed contact pieces 31 are subjected to surface treatment by chemical etching and are integrated with the lid portion 15 by insert molding. This processing causes the metal and the resin to be joined at the interface level and produces complex junctions exhibiting labyrinth effect, which enables gas molecules, such as hydrogen and nitrogen, to be prevented from leaking.

Each of the coil contact pieces 81 has one end side arranged inside the container body 12 and the other end side connected to the control circuit outside the container body 12. The relay contact pieces 85 are fixed to the spool 61 of the electromagnet unit 23, and the coil 72 of the electromagnet unit 23 is connected to the relay contact pieces 85. The support springs 88 are made of metal and are sandwiched between the coil contact pieces 81 and the relay contact pieces 85 inside the container body 12. Because of this configuration, it is possible to maintain an excellent contact state between the coil contact pieces 81 and the relay contact pieces 85 by expansion and contraction of the support springs 88 even in an environment in which the electromagnetic contactor is vibrated, which enables reliability of the product to be improved. The coil contact pieces 81 are subjected to surface treatment by chemical etching and are integrated with the container portion 14 by insert molding. This processing causes the metal and the resin to be joined at the interface level and produces complex junctions exhibiting labyrinth effect, which enables gas molecules, such as hydrogen and nitrogen, to be prevented from leaking.

The support springs 88 press the electromagnet unit 23 to the container body 12. Specifically, when the lid portion 15 is fixed to the container portion 14, the spool 61 is pressed to the back surface of the lid portion 15 via the partition wall member 54 due to repulsive force of the support springs 88. This configuration can prevent backlash from occurring to the electromagnet unit 23 and the partition wall member 54 inside the container body 12. Two support springs 88 on one side and two support springs 88 on the other side in the vertical direction, that is, in total, four support springs 88 are disposed, and are arranged in such a way that repulsive force equally acts on both sides in the vertical direction of the spool 61. Because of this configuration, deviation of the center of gravity is reduced and stability is improved. In addition, workability when the container body 12 is assembled is also improved.

Note that, differing from alternating current in which current zero crossing periodically occurs, in breaking of direct current in which no current zero crossing occurs, it is required to forcibly generate current zero crossing by increasing arc voltage, which is generated between the contacts of the main contact unit 21, to a voltage greater than or equal to power source voltage and restore insulation between the contacts. Thus, by stretching an arc to an arc-extinguishing space using the permanent magnets 55 in order to increase arc voltage, it is possible to improve breaking performance. Further, by arranging the main contact unit 21 and the auxiliary contact unit 22 in the hermetically sealed container 11 and filling the inside of the hermetically sealed container 11 with insulating gas, which improves breaking performance, it is possible to prevent the arc-extinguishing space from becoming larger in size.

### (Variations)

Although, in the present embodiment, the hermetically sealed container 11 of the hermetically sealed electromagnetic contactor was described, the present invention is not limited thereto, and the present embodiment is applicable to any other hermetically sealed containers that are filled with gas.

Although, in the present embodiment, the gas filling structure 16 is disposed on a surface on the far side in the depth direction of the hermetically sealed container 11, the present invention is not limited thereto, and the gas filling structure 16 may be disposed on a side surface in the vertical direction or the width direction or a surface on the near side in the depth direction.

Although, in the present embodiment, the screw 92 made of stainless steel is used, the present invention is not limited thereto, and, for example, a screw made of resin may be used.

Although, in the present embodiment, the screw 92 is used as a fastener, the present invention is not limited thereto, and a rivet may be used.

Although, in the embodiment, it is assumed that the auxiliary contact unit 22 is a b-contact of the normally-closed type, the present invention is not limited thereto, and the auxiliary contact unit 22 may be an a-contact of the normally-open type.

Although, in the embodiment, gas barrier coating is applied only to the outer peripheral surface of the hermetically sealed container 11, the present invention is not limited thereto, and gas barrier coating may also be applied to the inner peripheral surface of the hermetically sealed container 11.

Although, in the embodiment, the support springs 88 serve as both a support of the spool 61 and an electrical connection for the coil contact pieces 81, the present invention is not limited thereto. That is, the roles may be separated by disposing a spring member to support the spool 61 and a spring member to electrically connect the coil contact pieces 81.

While the present invention has been described with reference to the limited number of embodiments, the scope of the rights of the invention is not limited thereto. It will be obvious to those skilled in the art that various changes and modifications may be made in the embodiments based on the above disclosure.

### Reference Signs List

- 11: Hermetically sealed container
- 12: Container body
- 13: Auxiliary contact housing portion
- 14: Container portion
- 14a: Small-diameter boss
- 14b: Large-diameter boss
- 15: Lid portion
- 16: Gas filling structure
- 17: Opening portion
- 18: Recessed portion
- 21: Main contact unit
- 22: Auxiliary contact unit
- 23: Electromagnet unit
- 31: Main fixed contact piece
- 32: Main movable contact piece
- 33: Side plate portion
- 34: Upper plate portion
- 35: Lower plate portion
- 36: Main fixed contact
- 37: Terminal bolt
- 38: Main movable contact
- 41: Auxiliary fixed contact piece
- 42: Auxiliary movable contact piece
- 43: Lower plate portion
- 44: Side plate portion
- 46: Auxiliary fixed contact
- 47: Recessed portion
- 48: Auxiliary movable contact
- 51: Contact support
- 52: Main contact spring
- 53: Auxiliary contact spring
- 54: Partition wall member
- 55: Permanent magnet
- 56: Yoke
- 61: Spool
- 62: Plunger
- 63: Upper armature
- 64: Lower armature
- 65: Yoke
- 66: Return spring
- 71: Winding shaft
- 72: Coil
- 73: Side piece portion
- 74: Upper piece portion
- 75: Lower piece portion
- 81: Coil contact piece
- 82: Spool receiving portion
- 83: Deep recessed portion
- 84: Arm piece
- 85: Relay contact piece
- 86: Shallow recessed portion
- 87: Projecting portion
- 88: Support spring
- 91: Through-hole
- 92: Screw
- 93: Threaded hole
- 94: Tapered hole
- 95: Countersunk hole
- 96: Adhesive

## Claims

1. A gas filling structure comprising:
a through-hole formed in a hermetically sealed container made of resin to fill the hermetically sealed container with gas; and
a fastener fastened to the through-hole to seal the through-hole.

2. The gas filling structure according to claim 1, wherein
the through-hole includes:
a first through-hole to which the fastener is fastened; and
a second through-hole connected to the first through-hole from an inside of the hermetically sealed container and having diameter becoming smaller toward the first through-hole.

3. The gas filling structure according to claim 2, wherein the second through-hole has one end having a smaller diameter than diameter of the first through-hole, the one end being connected to the first through-hole.

4. The gas filling structure according to claim 2 or 3, wherein
the first through-hole is a threaded hole, and
the fastener is a screw fitting into the threaded hole.

5. The gas filling structure according to claim 4, wherein the screw has a head buried by adhesive.

6. A hermetically sealed electromagnetic contactor comprising:
the gas filling structure according to any one of claims 1 to 5; and
a main contact unit configured to open and close an electrical path of a main circuit,
wherein the main contact unit is hermetically sealed in the hermetically sealed container and the hermetically sealed container is filled with insulating gas.

7. The hermetically sealed electromagnetic contactor according to claim 6, wherein, to the hermetically sealed container, gas barrier coating is applied using laminated films of clay crystals.

8. A gas filling method comprising:
performing evacuation with a fastener half-fastened to a through-hole formed in a hermetically sealed container made of resin;
filling the hermetically sealed container with gas after performing the evacuation; and
completing fastening of the fastener after performing filling of the hermetically sealed container with the gas.

9. The gas filling method according to claim 8, wherein
the through-hole is a threaded hole, and
the fastener is a screw fitting into the threaded hole.

10. The gas filling method according to claim 9, wherein
in the hermetically sealed container, a main contact unit configured to open and close an electrical path of a main circuit is hermetically sealed,
the gas is insulating gas, and
the gas filling method comprises:
burying a head of the screw by adhesive after completing fastening of the screw; and
applying gas barrier coating to the hermetically sealed container, using laminated films of clay crystals after burying a head of the screw by adhesive.

## Amended claims

### Amended claims under Art. 19.1 PCT

1. A gas filling structure comprising:
a through-hole formed in a hermetically sealed container made of resin to fill the hermetically sealed container with gas;
a fastener fastened to the through-hole to seal the through-hole, wherein
the through-hole includes:
a first through-hole to which the fastener is fastened; and
a second through-hole connected to the first through-hole from an inside of the hermetically sealed container and having diameter becoming smaller toward the first through-hole.

2. The gas filling structure according to claim 1, wherein the second through-hole has one end having a smaller diameter than diameter of the first through-hole, the one end being connected to the first through-hole.

3. The gas filling structure according to claim 1 or 2, wherein
the first through-hole is a threaded hole, and
the fastener is a screw fitting into the threaded hole.

4. The gas filling structure according to claim 3, wherein the screw has a head buried by adhesive.

5. A hermetically sealed electromagnetic contactor comprising:
the gas filling structure according to any one of claims 1 to 4; and
a main contact unit configured to open and close an electrical path of a main circuit,
wherein the main contact unit is hermetically sealed in the hermetically sealed container and the hermetically sealed container is filled with insulating gas.

6. The hermetically sealed electromagnetic contactor according to claim 5, wherein, to the hermetically sealed container, gas barrier coating is applied using laminated films of clay crystals.

7. A gas filling method comprising:
performing evacuation with a fastener half-fastened to a through-hole formed in a hermetically sealed container made of resin;
filling the hermetically sealed container with gas after performing the evacuation; and
completing fastening of the fastener after performing filling of the hermetically sealed container with the gas.

8. The gas filling method according to claim 7, wherein
the through-hole is a threaded hole, and
the fastener is a screw fitting into the threaded hole.

9. The gas filling method according to claim 8, wherein
in the hermetically sealed container, a main contact unit configured to open and close an electrical path of a main circuit is hermetically sealed,
the gas is insulating gas, and
the gas filling method comprises:
burying a head of the screw by adhesive after completing fastening of the screw; and
applying gas barrier coating to the hermetically sealed container, using laminated films of clay crystals after burying a head of the screw by adhesive.

Statement under Art. 19.1 PCT
It has been cleared that the fastener is fastened to a first through-hole and the second through-hole is connected to the first through-hole from an inside of the hermetically sealed container and having diameter becoming smaller toward the first through-hole in claim 1.

The present invention has an effect to prevent dust or foreign substance from intruding into the sealed container.
